# FASCICULE DE BREVET EUROPEEN

(11) **EP 2 502 399 B1**
(45) Date de publication et mention de la délivrance du brevet: **01.07.2015**
(21) Numéro de dépôt: 10793009.1
(22) Date de dépôt: 18.11.2010
(51) Int. Cl.: H04L 29/06, G06F 9/455, G06F 21/55

(54) **PROCEDE ET DISPOSITIFS POUR LA SECURISATION DE LA CONNEXION D'UN TERMINAL A UN RESEAU INFORMATIQUE**
VERFAHREN UND VORRICHTUNGEN ZUR SICHERUNG DER VERBINDUNG EINES ENDGERÄTS MIT EINEM COMPUTERNETZ
METHOD AND DEVICES FOR SECURING THE CONNECTION OF A TERMINAL TO A COMPUTER NETWORK

(30) Priorité: 19.11.2009 FR 0958182
(43) Date de publication de la demande: 26.09.2012
(73) Titulaire: Saad, Clément, 34970 Lattes (FR)
(72) Inventeur: Saad, Clément, 34970 Lattes (FR)
(74) Mandataire: Pontet Allano & Associes
(86) Numéro de dépôt international: PCT/FR2010/052449
(87) Numéro de publication internationale: WO 2011/061448

(56) Documents cités:
- WO-A2-2008/146296
- WO-A2-2009/018268
- US-A1- 2006 112 342
- US-A1- 2008 289 028
- US-B1- 7 607 171

## Description

### Domaine technique

La présente invention entre dans le domaine des communications et de l'informatique.

L'invention concerne plus particulièrement la connexion d'un terminal à un réseau de communication de type informatique et la sécurisation des données transitant par une telle connexion.

L'invention trouvera une application particulière, mais aucunement limitative, dans la sécurisation et la régulation de flux de données entrant ou sortant vers ou depuis un terminal, tel un ordinateur, réciproquement depuis ou vers un réseau de communication, notamment informatique, tel internet, au travers d'une connexion audit réseau.

### Etat de la technique antérieure

De manière connue, un terminal se connecte à un réseau informatique au travers d'au moins une interface de communication. Via cette interface, transitent des flux de données entrants depuis ledit réseau vers ledit terminal et sortants depuis ledit terminal vers ledit réseau.

Un inconvénient majeur des flux de données, en particulier reçus par ledit terminal, réside dans les problèmes de sécurité engendrés. En effet, lesdites données reçues peuvent être dangereuses, à savoir qu'elles comprennent un logiciel ou des données malveillantes (« malware »), par exemple de manière non exhaustive : un virus, un vers, un cheval de Troie, une porte dérobée (« backdoor »), un logiciel espion, un canular (« hoax »), un spam, un hameçonnage (« phishing ») ou analogue. Dès lors, il existe une nécessité absolue de protéger ledit terminal de la réception de telles données malveillantes au travers de la sécurisation de sa connexion et du filtrage des données reçues.

D'autre part, la connexion audit réseau peut provoquer des failles de sécurité ou bien des accès à des portails virtuels non souhaités, par exemple des sites internet d'ordre personnel auquel un utilisateur accède depuis un terminal professionnel. Il doit alors être envisagé une restriction de l'accès dudit terminal vers ledit réseau.

Pour ce faire, il existe de nombreuses solutions, sous forme matérielle ou logicielle, généralement dédiées à l'un ou l'autre cas.

Une solution répandue consiste en un pare-feu ou firewall limitant les intrusions vers ledit terminal en bloquant certains ports de communication avec ledit réseau et en filtrant les flux de données. Un firewall peut être logiciel, installé sur ledit terminal ou un serveur faisant office de passerelle avec ledit réseau, ou bien matériel.

Une autre solution, entièrement logicielle, consiste en des applications dites « anti-virus ». Il s'agit d'applications installées sur ledit terminal, ou bien sur un serveur faisant office de passerelle, et permettant de filtrer les données une fois reçues.

De telles solutions, si elles sont adaptées pour des terminaux de type postes fixes, engendrent des problèmes de mise en oeuvre dans le cadre de terminaux mobiles, de type ordinateur portable, susceptibles d'être connectés depuis différents emplacements géographiques. Dès lors, les solutions mises en oeuvre par un serveur ou bien un matériel annexe physique (tel un pare-feu ou un routeur) ne peuvent être envisagées.

Une solution alternative connue consiste en des dispositifs amovibles, aptes à être connectés audit terminal et permettant de configurer pour chaque terminal des paramètres de connexion particuliers et intégrant des logiciels anti-virus ou autres.

Un exemple d'un tel dispositif amovible est décrit au travers du document WO 02/095543 concernant la sécurisation par chiffrement des données, en particulier des paquets formant lesdits flux. Si une telle solution améliore la sécurité du transfert des données, elle n'empêche aucunement la transmission, même cryptée, de logiciels ou données malveillants.

Une autre solution est décrite dans le document WO2007/069245 concernant un dispositif amovible pourvu de moyens de connexion à un terminal et faisant office de passerelle de manière à filtrer les flux de données provenant dudit réseau. Pour ce faire, cet intermédiaire intègre des logiciels exécutés sur ledit terminal depuis le dispositif, mais aussi au niveau matériel de manière à détourner la connexion avec ledit réseau afin qu'elle transite par ledit dispositif amovible.

Un tel dispositif est limité au niveau matériel, en rapport avec ledit terminal. En effet, il présente l'inconvénient d'être spécifique à chaque type de connexion, filaire ou non, avec ledit réseau. De plus, il est spécifique au système d'exploitation opérant sur ledit terminal, étant donné qu'il agit dans les couches du noyau dudit système.

On connait également le document US 2006/112342 A1 qui décrit un procédé selon le préambule de la revendication 1.

### Exposé de l'invention

L'invention a pour but de pallier les inconvénients de l'état de la technique en proposant une solution entièrement applicative, c'est-à-dire pouvant être implémentée sous une forme logicielle, permettant de sécuriser la connexion d'un terminal à un réseau de communication. En particulier, l'invention permet de filtrer les flux de données au moyen d'applications dédiées et de configurer des restrictions d'accès d'un utilisateur audit réseau.

Avantageusement, le traitement des flux est rendu possible au travers d'une reproduction virtuelle des interfaces de connexion dudit ordinateur et en rendant ces dernières indisponibles.

Pour ce faire, la présente invention concerne un procédé de sécurisation de la connexion d'un terminal à un réseau de communication, notamment de type informatique, dans lequel ledit terminal est connecté audit réseau au travers d'au moins une interface de communication de manière à émettre et recevoir au moins un flux de données, selon la revendication 1.

Le procédé selon l'invention peut comprendre en outre des étapes :
- d'attribution d'une adresse physique à l'interface virtuelle identique à l'adresse physique de l'interface de communication ;
- d'attribution d'une adresse MAC (Contrôle d'accès au support ou *Media Access Control* en anglais) à l'interface virtuelle identique à l'adresse MAC de l'interface de communication ;
- d'affectation à l'interface de communication d'une adresse IP incompatible avec le réseau ;
- de création d'une nouvelle interface au niveau dudit terminal apte à recevoir le flux contrôlé ;

Le procédé selon l'invention peut comprendre en outre, au titre du contrôle du flux de données au niveau de la passerelle, au moins l'une quelconque des étapes suivantes : protection, filtrage, traitement dudit flux de données.

La passerelle virtuelle peut comprendre une machine virtuelle.

Cette machine virtuelle peut comprendre un système d'exploitation différent de celui du terminal, ou un système d'exploitation identique ou similaire à celui du terminal.

Suivants d'autres aspects, il est proposé :
- un dispositif programme d'ordinateur comprenant des instructions pour exécuter les étapes du procédé selon l'invention, lequel programme d'ordinateur étant apte à être exécuté sur le terminal ;
- un dispositif de stockage de masse comprenant un programme d'ordinateur, caractérisé en ce qu'il est apte à être relié au terminal de telle sorte à permettre l'exécution dudit programme d'ordinateur sur ledit terminal ;
- un dispositif de stockage de masse comprenant l'un quelconque des dispositifs suivants : clé USB, carte mémoire, disque dur, ou tout autre support physique ou virtuel.

Suivant d'autres modes de réalisation, le procédé selon l'invention peut consister à :
- créer une passerelle virtuelle de contrôle applicatif dudit flux de données ;
- créer une interface virtuelle au niveau de ladite passerelle par duplication de ladite interface de communication ;
- rendre indisponible ladite interface de communication vis-à-vis dudit réseau de sorte que ledit flux soit redirigé vers ladite interface virtuelle ;
- contrôler ledit flux au niveau de ladite passerelle puis le router (ou transférer), contrôlé, vers ledit terminal.

Ladite duplication peut consister en la création d'un pont entre ladite interface de communication et ladite nouvelle interface virtuelle.

Avantageusement, ledit procédé peut consister à rendre indisponible ladite interface de communication en modifiant l'interface avec le réseau par affectation d'une adresse incompatible avec ledit réseau.

De plus, le routage peut consister à créer une nouvelle interface au niveau dudit terminal afin de lui transmettre ledit flux contrôlé.

En particulier, ledit contrôle applicatif peut consister en un ensemble de modules de protection, de filtre et de traitement dudit flux de données.

De préférence, ladite passerelle virtuelle peut être constituée par une image virtuelle exécutée à partir d'une machine virtuelle.

Ainsi, l'invention bloque les interfaces existantes d'un terminal, les rendant inaccessibles et duplique ces interfaces de manière virtuelle afin de les substituer aux interfaces bloquées. Dès lors, cette dernière reçoit les flux de données en lieu et place dudit terminal, effectue un traitement sur ces flux pour les renvoyer traités vers ledit terminal.

Avantageusement, les interfaces virtuelles présentent du point de vue du réseau des caractéristiques sensiblement identiques à celles des interfaces de communication du terminal qu'elles reproduisent. En particulier, elles peuvent présenter la même adresse physique ou adresse MAC, et peuvent donc se substituer complètement aux interfaces de communication du terminal.

Cette substitution des interfaces virtuelles aux interfaces de communication du terminal au niveau de l'adresse physique, qui correspond à une prise de contrôle par la passerelle virtuelle des interfaces de communication du terminal au niveau de la couche de liaison (selon la terminologie classique des protocoles TCP/IP), permet d'obtenir avec le procédé selon l'invention une efficacité de protection optimale, bien supérieure à celle de procédés de l'art antérieur simplement basés sur l'utilisation de machines virtuelles pour sécuriser des applications réseau. En effet, dans les procédés connus de l'art antérieur, les interfaces de communication sont simplement partagées entre le terminal et une ou plusieurs machines virtuelles au moyen d'une application de routage qui est de fait un programme exécuté au niveau du système d'exploitation du terminal. Il s'ensuit un risque de faille de sécurité entre les interfaces de communication et la passerelle virtuelle qui n'existe plus dans le procédé selon l'invention.

De plus, l'invention étant entièrement applicative, c'est-à-dire qu'elle peut être réalisée sous forme logicielle, elle s'affranchit des contraintes liées au matériel et peut être introduite sur tout type de support.

### Description des figures et modes de réalisation

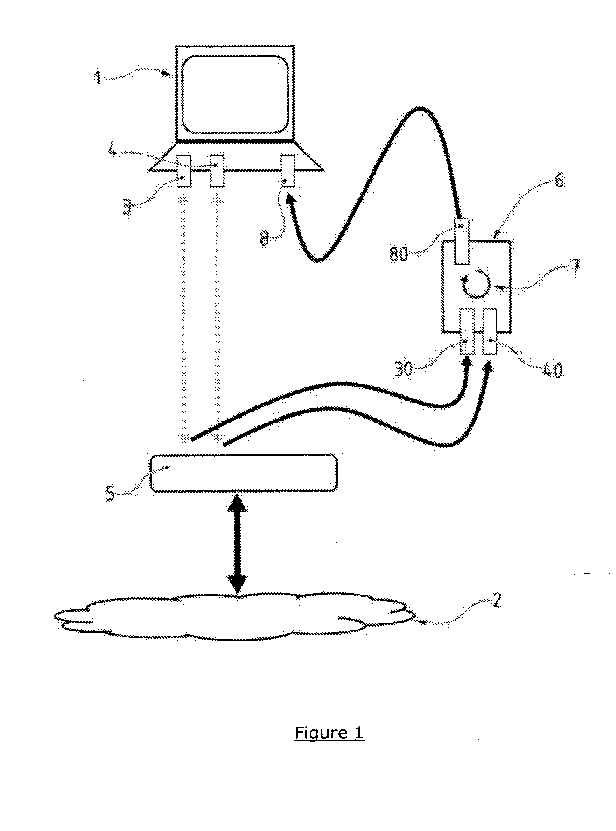

D'autres caractéristiques et avantages de l'invention ressortiront de la description détaillée qui va suivre des modes de réalisation non limitatifs de l'invention, en référence à la figure 1 annexée représentant une vue schématisée d'un exemple d'architecture au sein de laquelle est mis en oeuvre le procédé de sécurisation selon l'invention.

La présente invention concerne la sécurisation de la connexion d'un terminal 1 à un réseau de communication 2.

On notera que le terminal 1 et le réseau 2 peuvent être de tout type, notamment de type informatique. Dans ce cas, le terminal 1 peut être un ordinateur, tandis que le réseau 2 peut avantageusement être un intranet ou internet.

De manière générale, le terminal 1 est connecté au réseau 2 au travers d'au moins une interface de communication, préférentiellement plusieurs interfaces distinctes.

Dans l'exemple d'architecture visible sur la figure, le terminal 1 comprend deux interfaces de communication 3 et 4 reliés au réseau 2. En particulier, la liaison s'effectue au travers d'un routeur 5, servant de passerelle avec le reste du réseau 2, en particulier internet.

A ce titre, le routeur 5 comprend un paramétrage du réseau au niveau local, à savoir entre le routeur 5 et le terminal 1. Plus particulièrement, le routeur 5 peut comprendre des paramètres de type adressage des interfaces 3 et 4 dudit terminal 1.

On notera que, suivant le mode préférentiel de réalisation, cet adressage peut consister à l'affectation d'adresses IP (pour « Internet Protocol ») et/ou de masque de sous-réseau, de manière automatique (par exemple au travers du protocole d'affectation réseau DHCP pour « Dynamic Host Configuration Protocol ») ou bien manuelle par l'intermédiaire d'un administrateur dudit routeur 5.

Ainsi, de base, chaque interface 3,4 se voit affecter initialement une adresse IP lui permettant de se connecter au réseau 2 par le biais du routeur 5. Dès lors, ainsi configuré initialement, le terminal 1 est connecté au réseau 2 de manière à émettre et recevoir au moins un flux de données, notamment un flux par interface 3 et 4.

Cette connexion initiale est représentée sur la figure sous la forme de deux flux de données grisés en pointillés entre le terminal 1 et le routeur 5.

Avantageusement, la présente invention consiste à créer une passerelle virtuelle 6 à même d'assurer la sécurisation et la régulation du ou des flux de données. La passerelle 6 peut consister en une image virtuelle, logicielle, construite et configurée à partir des caractéristiques du terminal 1.

A ce titre, il est possible d'introduire au sein de cette image virtuelle un système d'exploitation similaire ou différent de celui opérant sur le terminal 1. Dans le cas d'un système différent, les risques d'exécution de logiciels malveillants ou bien d'attaques par un tiers, seront d'autant plus diminués.

En particulier, l'image virtuelle est exécutée à partir ou sous la forme d'une machine virtuelle installée sur le terminal 1 ou s'exécutant à partir d'un support distinct. Dans l'un ou l'autre cas, une partie de la mémoire du terminal 1 peut être allouée pour cette exécution.

Il est par exemple avantageux de créer une passerelle virtuelle 6 comprenant une machine virtuelle fonctionnant sous un système d'exploitation Linux, pour l'implémenter sur un terminal 1 fonctionnant avec un système d'exploitation de type différent, comme par exemple Microsoft® Windows®.

Ainsi, la passerelle virtuelle 6 peut être configurée, en particulier en lui rattachant la totalité des interfaces 3,4 du terminal 1, notamment en les bridgeant. L'état de l'image de la passerelle virtuelle 6 peut alors être sauvegardé pour être restauré lors d'une prochaine exécution.

De plus, l'invention prévoit de rediriger chaque flux de données vers la passerelle 6 afin de le contrôler.

Avantageusement, ce contrôle du flux après sa redirection vers la passerelle 6 s'effectue de manière applicative, à savoir qu'il intervient uniquement au travers de logiciels de la couche applicative (dans le sens où il est exécuté par des applications logicielles). Dès lors, l'invention est portable et compatible, à savoir qu'elle peut être adaptée à tout système d'exploitation, et elle peut également s'affranchir de tout type de support. Elle peut ainsi être directement installée sur le terminal 1, ou bien sur un dispositif matériel pourvu de moyens d'interaction avec le terminal 1, tel une mémoire de masse équipée d'une connectique standard, comme par exemple une clef équipée d'une connectique USB (pour « Universal Serial Bus »).

Plus précisément, le contrôle applicatif consiste en un ensemble 7 de modules de protection, de filtre et de traitement dudit flux de données.

De tels modules peuvent être, de manière non exhaustive, un pare-feu, un antivirus, un anti-espion, un anti-spam, un proxy, un filtre d'adressage (telle une URL pour « Uniform Resource Locator »), un système de détection et de prévention d'intrusion (IDPS), un système de prévention d'usurpation d'identité physique (MAC), un réseau privé virtuel (RPV), une sécurisation et la régulation de certains types de flux, notamment la voix sur réseau IP (VoIP pour « Voice over Internet Protocol »).

Après traitement, les flux de données filtrés et donc sains, sont renvoyés vers le terminal 1. Il en va de même en sens inverse pour des demandes d'accès à des portails virtuels autorisés ou non en fonction de la configuration d'un module.

Pour permettre le transit des flux de données au travers de la passerelle virtuelle 6, l'invention prévoit de court-circuiter ou bloquer le chemin de connexion existant entre le terminal 1 et le réseau 2, notamment le routeur 5.

D'une part, l'invention fait en sorte de substituer les interfaces de communication 3,4 existants au niveau du terminal 1 par des interfaces virtuelles 30,40 au niveau de la passerelle 6.

La création de chaque interface virtuelle 30 (ou 40) au niveau de la passerelle 6 s'effectue par duplication de l'interface de communication correspondant 3 (ou réciproquement 4).

De manière préférentielle, cette duplication consiste en la création d'un pont entre l'interface de communication 3 (ou 4) et la nouvelle interface virtuelle 30 (ou 40). En d'autres termes, les interfaces de communication 3,4 et les nouvelles interfaces virtuelles 30,40 sont « bridgées ».

Cette duplication comprend la duplication de l'adresse physique (ou adresse MAC pour Contrôle d'accès au support ou en anglais *Media Access Control*), de telle sorte que l'interface virtuelle 30 (ou 40) ait, du point de vue du réseau 2 ou du routeur 5, la même adresse MAC que l'interface de communication 3 (ou 4).

La création de interface virtuelle 30 (ou 40) implique donc une prise de contrôle de l'interface de communication 3 (ou 4) au niveau de la couche de liaison, ce qui permet d'obtenir une sécurité optimale.

D'autre part, l'invention prévoit de rendre indisponible l'interface de communication 3,4 vis-à-vis du réseau 2. Pour ce faire, l'invention modifie l'interface avec le réseau 2 par affectation d'une adresse incompatible avec le réseau 2. En d'autres termes, l'invention change la configuration réseau initiale du terminal 1. Chaque interface de communication 3,4 se voit affecter une adresse IP invalide sur le réseau 2, non routable par le routeur 5.

Dès lors, le flux de données est automatiquement redirigé vers l'interface virtuelle 30,40. En effet, la duplication des interfaces conserve les paramètres valides de la configuration initiale (y compris les adresses physiques ou MAC) et les déporte au niveau de la passerelle virtuelle 6 qui est alors automatiquement connectée audit réseau 2, notamment le routeur 5, à la place du terminal 1.

Ainsi, les flux de données transitent par la passerelle 6 et peuvent être contrôlés puis routés (ou dirigés) après traitement vers le terminal 1.

On notera que plusieurs flux entrant au niveau de la passerelle 6 peuvent être contrôlés puis renvoyés sous forme d'un unique flux vers le terminal 1.

A ce titre, le routage consiste à créer une nouvelle interface 8 au niveau du terminal 1 afin de lui transmettre le flux contrôlé depuis la passerelle virtuelle 6.

Plus précisément, une interface 80 virtuelle complémentaire de routage est créée de manière à créer une connexion, d'une part, avec l'interface 8 et, d'autre part, avec les autres interfaces virtuelles 30 et 40. La liaison entre les interfaces virtuelles 30,40 et l'interface complémentaire 80 transite par les modules de contrôle 7 afin d'opérer le traitement sur les flux de données.

Ainsi, les flux parviennent sains au niveau du terminal 1 par l'intermédiaire de la passerelle virtuelle 6.

L'invention permet au terminal 1 de recevoir des flux de données depuis le réseau 2 mais de les rediriger vers la passerelle 6 avant de pouvoir accéder à leurs contenus.

Bien entendu, l'invention n'est pas limitée aux exemples illustrés et décrits précédemment qui peuvent présenter des variantes et modifications sans pour autant sortir du cadre de l'invention

## Revendications

1. Procédé de sécurisation de la connexion d'un terminal (1) à un réseau (2) de communication, notamment de type informatique, dans lequel ledit terminal (1) est connecté audit réseau (2) au travers d'au moins une interface de communication (3, 4) de manière à émettre et recevoir au moins un flux de données, comprenant des étapes de :
- création d'une passerelle virtuelle (6) de contrôle dudit flux de données comprenant une machine virtuelle implémentée sur ledit terminal (1),
- création d'une interface virtuelle (30, 40) au niveau de ladite passerelle (6) par duplication de ladite interface de communication (3, 4),
- contrôle dudit flux de données au niveau de ladite passerelle (6) et routage du flux de données contrôlé vers ledit terminal (1),
- configuration de ladite interface de communication (3, 4) pour la rendre indisponible vis-à-vis dudit réseau (2), de sorte que ledit flux de données soit redirigé vers ladite interface virtuelle (30, 40).
**caractérisé en ce qu'**il comprend en outre une étape d'affectation à l'interface de communication (3,4) d'une adresse incompatible avec ledit réseau (2), de telle sorte à rendre indisponible ladite interface de communication (3, 4) vis-à-vis dudit réseau (2).

2. Procédé de sécurisation selon la revendication 1, **caractérisé en ce qu'**il consiste à :
- créer une passerelle virtuelle (6) de contrôle applicatif dudit flux de données,
- créer une interface virtuelle (30, 40) au niveau de ladite passerelle (6) par duplication de ladite interface de communication (3, 4),
- rendre indisponible ladite interface de communication (3, 4) vis-à-vis dudit réseau (2) de sorte que ledit flux soit redirigé vers ladite interface virtuelle (30, 40),
- contrôler ledit flux au niveau de ladite passerelle (6) puis le router, (contrôler), vers ledit terminal (1).

3. Procédé de sécurisation selon l'une des revendications 1 ou 2, **caractérisé en ce que** ladite duplication comprend en outre une étape de création d'un pont entre ladite interface de communication (3, 4) et ladite interface virtuelle (30, 40).

4. Procédé selon l'une quelconque des revendications précédentes, **caractérisé en ce qu'**il comprend en outre une étape d'attribution d'une adresse physique à l'interface virtuelle (30, 40) identique à l'adresse physique de l'interface de communication (3, 4).

5. Procédé selon l'une quelconque des revendications précédentes, **caractérisé en ce qu'**il comprend en outre une étape d'attribution d'une adresse MAC à l'interface virtuelle (30, 40) identique à l'adresse MAC de l'interface de communication (3, 4).

6. Procédé selon la revendication 6, **caractérisé en ce qu'**il comprend en outre une étape d'affectation à l'interface de communication (3, 4) d'une adresse IP incompatible avec le réseau (2).

7. Procédé de sécurisation selon l'une quelconque des revendications précédentes, **caractérisé en ce qu'**il comprend en outre une étape de création d'une nouvelle interface (8) au niveau dudit terminal (1) apte à recevoir le flux contrôlé.

8. Procédé de sécurisation selon l'une quelconque des revendications précédentes, **caractérisé en ce qu'**il comprend en outre, au titre du contrôle du flux de données au niveau de la passerelle (6), au moins l'une quelconque des étapes suivantes : protection, filtrage, traitement dudit flux de données.

9. Procédé de sécurisation selon l'une quelconques des revendications précédentes, **caractérisé en ce que** la passerelle virtuelle (6) comprend une machine virtuelle.

10. Procédé de sécurisation selon la revendication 10, **caractérisé en ce que** la machine virtuelle comprend un système d'exploitation différent de celui du terminal (1).

11. Dispositif programme d'ordinateur, **caractérisé en ce qu'**il comprend des instructions pour exécuter les étapes du procédé selon l'une quelconque des revendications précédentes, et **en ce qu'**il est apte à être exécuté sur le terminal (1).

12. Dispositif de stockage de masse comprenant un programme d'ordinateur selon la revendication 11, **caractérisé en ce qu'**il est apte à être relié au terminal (1) de telle sorte à permettre l'exécution dudit programme d'ordinateur sur ledit terminal (1).

13. Dispositif de stockage de masse selon la revendication 12, **caractérisé en ce qu'**il comprend l'un quelconque des dispositifs suivants : clé USB, carte mémoire, disque dur.

## Patentansprüche

1. Verfahren zur Sicherung der Verbindung eines Endgeräts (1) mit einem Kommunikationsnetz (2), insbesondere mit einem Computernetz, wobei das Endgerät (1) mit dem Netz (2) über zumindest eine Kommunikationsschnittstelle (3, 4) derart verbunden ist, dass es zumindest einen Datenfluss sendet und empfängt, umfassend die nachfolgenden Schritte:
- Erstellen eines virtuellen Gateways (6) zur Kontrolle des Datenflusses, der eine am Endgerät (1) eingesetzte virtuelle Maschine enthält,
- Erstellen einer virtuellen Schnittstelle (30, 40) im Bereich des Gateways (6) durch Duplizieren der Kommunikationsschnittstelle (3, 4),
- Kontrolle des Datenflusses im Bereich des Gateways (6) und Routing des kontrollierten Datenflusses zum Endgerät (1),
- Konfigurieren der Kommunikationsschnittstelle (3, 4) um sie für das Netz (2) nichtverfügbar zu machen, so dass der Datenfluss zur virtuellen Schnittstelle (30, 40) umgeleitet wird,
**dadurch gekennzeichnet, dass** es ferner einen Schritt des Zuweisens einer mit dem Netz (2) inkompatiblen Adresse an die Kommunikationsschnittstelle (3, 4) umfasst, so dass die Kommunikationsschnittstelle (3, 4) für das Netz (2) nichtverfügbar gemacht wird.

2. Verfahren zur Sicherung nach Anspruch 1, **dadurch gekennzeichnet, dass** es darin besteht, dass
- ein virtuelles Gateway (6) zur Kontrolle des Datenflusses erstellt wird,
- eine virtuelle Schnittstelle (30, 40) im Bereich des Gateways (6) durch Duplizieren der Kommunikationsschnittstelle (3, 4) erstellt wird,
- die Kommunikationsschnittstelle (3, 4) für das Netz (2) nichtverfügbar gemacht wird, so dass der Datenfluss zur virtuellen Schnittstelle (30, 40) umgeleitet wird,
- der Datenfluss im Bereich des Gateways (6) kontrolliert und dann zum Endgerät (1) geroutet (kontrolliert) wird.

3. Verfahren zur Sicherung nach einem der Ansprüche 1 oder 2, **dadurch gekennzeichnet, dass** das Duplizieren ferner einen Schritt des Herstellens einer Brücke zwischen der Kommunikationsschnittstelle (3, 4) und der virtuellen Schnittstelle (30, 40) umfasst.

4. Verfahren nach einem beliebigen der vorangehenden Ansprüche, **dadurch gekennzeichnet, dass** es ferner einen Schritt des Zuordnens einer physikalischen Adresse zur virtuellen Schnittstelle (30, 40) umfasst, die identisch ist mit der physikalischen Adresse der Kommunikationsschnittstelle (3, 4).

5. Verfahren nach einem beliebigen der vorangehenden Ansprüche, **dadurch gekennzeichnet, dass** es ferner einen Schritt des Zuordnens einer MAC-Adresse zur virtuellen Schnittstelle (30, 40) umfasst, die identisch ist mit der MAC-Adresse der Kommunikationsschnittstelle (3, 4).

6. Verfahren nach Anspruch 6, **dadurch gekennzeichnet, dass** es ferner einen Schritt des Zuordnens einer mit dem Netz (2) inkompatiblen IP-Adresse zur Kommunikationsschnittstelle (3, 4) umfasst.

7. Verfahren zur Sicherung nach einem beliebigen der vorangehenden Ansprüche, **dadurch gekennzeichnet, dass** es ferner einen Schritt des Erstellens einer neuen Schnittstelle (8) im Bereich des Endgeräts (1) umfasst, die dazu geeignet ist, den kontrollierten Datenfluss zu empfangen.

8. Verfahren zur Sicherung nach einem beliebigen der vorangehenden Ansprüche, **dadurch gekennzeichnet, dass** es ferner zur Kontrolle des Datenflusses im Bereich des Gateways (6) zumindest einen beliebigen der nachfolgenden Schritte umfasst: Schutz, Filterung, Verarbeitung des Datenflusses.

9. Verfahren zur Sicherung nach einem beliebigen der vorangehenden Ansprüche, **dadurch gekennzeichnet, dass** das virtuelle Gateway (6) eine virtuelle Maschine enthält.

10. Verfahren zur Sicherung nach Anspruch 10, **dadurch gekennzeichnet, dass** die virtuelle Maschine ein Betriebssystem enthält, das sich von dem des Endgeräts (1) unterscheidet.

11. Computerprogrammeinrichtung, **dadurch gekennzeichnet, dass** sie Anweisungen enthält, um die Schritte des Verfahrens nach einem beliebigen der vorangehenden Ansprüche auszuführen und dass sie auf dem Endgerät (1) ausgeführt werden kann.

12. Massenspeichereinrichtung umfassend ein Computerprogramm nach Anspruch 11, **dadurch gekennzeichnet, dass** sie so mit dem Endgerät (1) verbunden werden kann, dass das Ausführen des Computerprogramms auf dem Endgerät (1) ermöglich wird.

13. Massenspeichereinrichtung nach Anspruch 12, **dadurch gekennzeichnet, dass** sie eine beliebige der nachfolgenden Vorrichtungen enthält: USB-Massenspeicher, Speicherkarte, Festplatte.

## Claims

1. A method for securing the connection of a terminal (1) to an, in particular computer-based, communication network (2) in which said terminal (1) is connected to said network (2) across at least one communication interface (3, 4) in such a way as to send and receive at least one data stream, comprising the steps of:
- creating a virtual gateway (6) for controlling said data stream comprising a virtual machine implemented on said terminal (1),
- creating a virtual interface (30, 40) at the level of said gateway (6) by duplicating said communication interface (3, 4),
- controlling said data stream at the level of said gateway (6) and routing the controlled data stream towards said terminal (1),
- configuring said communication interface (3, 4) so as to render it unavailable to said network (2), such that said data stream is redirected to said virtual interface (30, 40),
**characterised in that** it further comprises a step of assigning an address that is incompatible with said network (2) to the communication interface (3, 4), such that said communication interface (3, 4) is rendered unavailable to said network (2).

2. The method for securing according to claim 1, **characterised in that** it consists in:
- creating a virtual gateway (6) for controlling said data stream,
- creating a virtual interface (30, 40) at the level of said gateway (6) by duplicating said communication interface (3, 4),
- rendering said communication interface (3, 4) unavailable to said network (2), such that said stream is redirected to said virtual interface (30, 40),
- controlling said stream at the level of said gateway (6) then routing (controlling) it towards said terminal (1).

3. The method for securing according to one of claims 1 or 2, **characterised in that** said duplication further comprises a step of creating a bridge between said communication interface (3, 4) and said virtual interface (30, 40).

4. The method according to one of the preceding claims, **characterised in that** it further comprises a step of assigning a physical address to the virtual interface (30, 40) identical to the physical address of the communication interface (3, 4).

5. The method according to one of the preceding claims, **characterised in that** it further comprises a step of assigning a MAC address to the virtual interface (30, 40) identical to the MAC address of the communication interface (3, 4).

6. The method according to claim 6, **characterised in that** it further comprises a step of assigning an IP address that is incompatible with the network (2) to the communication interface (3, 4).

7. The method for securing according to one of the preceding claims, **characterised in that** it further comprises a step of creating a new interface (8) at the level of said terminal (1) capable of receiving the controlled stream.

8. The method for securing according to one of the preceding claims, **characterised in that** it further comprises, in order to control the data stream at the level of the gateway (6), at least one of the following steps: protection, filtering, processing said data stream.

9. The method for securing according to one of the preceding claims, **characterised in that** the virtual gateway (6) comprises a virtual machine.

10. The method for securing according to claim 10, **characterised in that** the virtual machine comprises an operating system that is different from that of the terminal (1).

11. Computer program device, **characterised in that** it comprises instructions for executing the process steps according to one of the preceding claims, and **in that** it is capable of being executed on the terminal (1).

12. Device for mass storage comprising a computer program according to claim 11, **characterised in that** it is capable of being linked to the terminal (1), such as to permit the execution of said computer program on said terminal (1).

13. Device for mass storage according to claim 12, **characterised in that** it comprises one of the following devices: USB key, memory card, hard disk.
